# EUROPÄISCHE PATENTSCHRIFT

(11) **EP 0 982 995 B1**
(45) Veröffentlichungstag und Bekanntmachung des Hinweises auf die Patenterteilung: **20.08.2003**
(21) Anmeldenummer: 98925526.0
(22) Anmeldetag: 04.05.1998
(51) Int. Cl.: A01N 47/36, A01N 47/30, A01N 43/707, C09D 5/14, C09D 5/16

(54) **ALGIZIDE MITTEL**
ALGICIDES
ALGICIDES

(30) Priorität: 15.05.1997 DE 19720342
(43) Veröffentlichungstag der Anmeldung: 08.03.2000
(73) Patentinhaber: Bayer Aktiengesellschaft, 51368 Leverkusen (DE)
(72) Erfinder: HEUER, Lutz, D-41542 Dormagen (DE); UHR, Hermann, D-47800 Krefeld (DE); KUGLER, Martin, D-42799 Leichlingen (DE); WACHTLER, Peter, D-51061 Köln (DE); PAULUS, Wilfried, D-47800 Krefeld (DE)
(86) Internationale Anmeldenummer: EP9802617
(87) Internationale Veröffentlichungsnummer: WO98051154

(56) Entgegenhaltungen:
- EP-A- 0 345 955
- WO-A-97/06676
- WO-A-97/18710
- DE-A- 4 433 856
- CHEMICAL ABSTRACTS, vol. 115, no. 11, 1991 Columbus, Ohio, US; abstract no. 108193x, BLAISE ET AL.: "Ecotoxicological assessment of Tebuthiuron , a substituted urea class herbicide" XP002078010 & REV. SCI. EAU, Bd. 4, Nr. 1, 1991, Seiten 121-134,
- CHEMICAL ABSTRACTS, vol. 103, no. 21, 1985 Columbus, Ohio, US; abstract no. 173667w, MEYERHOFF: "Chronic toxicity of tebuthiuron to an alga (Selenastrum capricornutum), a cladoceran (Daphnia magna), and the fathead minnow (Pimephales promelas)" XP002078011 & ENVIRON. TOXICOL. CHEM., Bd. 4, Nr. 5, 1985, Seiten 695-701,
- CHEMICAL ABSTRACTS, vol. 121, no. 1, 4. Juli 1994 Columbus, Ohio, US; abstract no. 2943a, KIRBY ET AL.: "Effects of atrazine, isoproturon and mecoprop on the macrophyte Lemna minor and the alga Scenedesmus subspicatus " XP002078012 & BULL. ENVIRON. CONTAM. TOXICOL., Bd. 53, Nr. 1, 1994, Seiten 120-126,
- CHEMICAL ABSTRACTS, vol. 84, no. 5, 1976 Columbus, Ohio, US; abstract no. 26692m, BRINGMANN G. : "Effect of herbicidal phenylurea derivatives on blue algae (model organisms, Microcystis aerugonisa and Nostoc species)" XP002078013 & GAS-WASSERFACH, WASSSER-ABWASSER, Bd. 116, Nr. 8, 1975, Seiten 366-369,
- CHEMICAL ABSTRACTS, vol. 118, no. 11, 15. März 1993 Columbus, Ohio, US; abstract no. 95907t, KUMAR: "Response of Anabaena sp. 310 to isoproturon" XP002078014 & J. INDIAN BOT. SOC., Bd. 70, Nr. 1-4, 1991, Seiten 277-280, in der Anmeldung erwähnt
- CHEMICAL ABSTRACTS, vol. 125, no. 15, 7. Oktober 1996 Columbus, Ohio, US; abstract no. 188002d, TRAUNSPURGER ET AL.: "Comparative investigation of the effect of a herbicide on aquatic organisms in single species tests and aquatic microcosms" XP002078015 & CHEMOSPHERE, Bd. 33, Nr. 6, 1996, Seiten 1129-1141,
- CHEMICAL ABSTRACTS, vol. 120, no. 15, 11. April 1994 Columbus, Ohio, US; abstract no. 185027b, ANTON ET AL.: "Ecotoxic effects of four herbicides (glyphosate, alachlor, chlortoluron and isoproturon) on the algae Chlorella pyrenoidosa Chick." XP002078016 & SCI. TOTAL ENVIRON., Bd. 1, 1993, Seiten 845-851, in der Anmeldung erwähnt
- CHEMICAL ABSTRACTS, vol. 105, no. 4, 28. Juli 1986 Columbus, Ohio, US; abstract no. 28822e, GRANT ET AL.: "A new method for assesssing the resistance of stone to algal disfigurement and the efficacy of chemical inhibitors" XP002078017 & ACTES-CONGR. INT. ALTERATION CONSER. PIERRE, Bd. 2, 1985, Seiten 663-674,

## Beschreibung

Die vorliegende Anmeldung betrifft die neue Verwendung der bekannten Wirkstoffe Benzthiazuron, Methabenzthiazuron, Tebuthiuron, Isoproturon und Ethiozin sowie deren Mischungen und Mischungen dieser Wirkstoffe mit weiteren bekannten Wirkstoffen, zur Bekämpfung des Algenbewuchses von Anstrichfarben, Antifoulingfarben und anderen technischen Materialien.

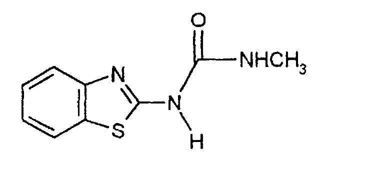

### Benzthiazuron

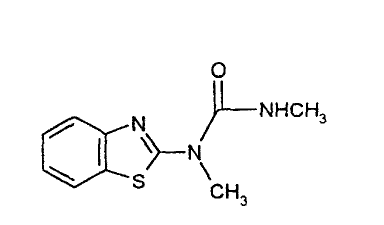

### Methabenzthiazuron

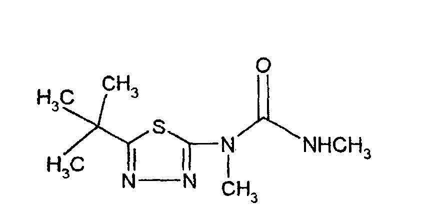

### Tebuthiuron

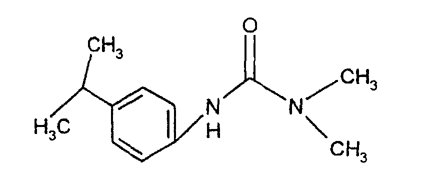

### Isoproturon

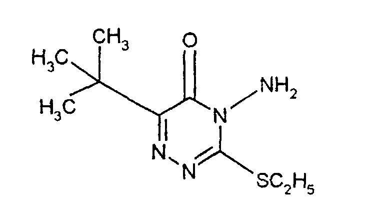

### Ethiozin

Es ist bereits bekannt geworden, daß man Unkräuter selektiv mit Benzthiazuron und Methabenzthiazuron bekämpfen kann (vergl. z.B. BE-PS 687 019; US 2 756 135; GB 1 085 430).

Es ist auch bekannt, daß man mit Tebuthiuron (vergl. DE 1 816 568) und Ethiozin (vergl. US 3 671 523) Unkräuter bekämpfen kann.

Isoproturon wird ebenfalls zur Bekämpfung von unerwünschtem Unkrautwuchs eingesetzt (s. z.B. DE 2 039 041).

WO-A-9606676 offenbart die Verwendung von Dehydroabietylamin (Rosinamin) als Formulierungshilfsmittel in algiziden Zusammensetzungen zum Schutz von technischen Materialien vor Bakterien, Pilzen, Algen usw.

DE-A-4433856 offenbart die Verwendung von 2-Mercaptopyridin-N-oxid und/oder dessen Metallkomplexen und algiziden Harnstoffen, wie N,N-Dimethyl-N-[4-(isopropyl)-phenyl]-harnstoff (Isoproturon) zum Schutz von technischen Materialien vor Bewuchs durch aquatische Organismen.

Die folgende Dokumente beschreiben die Toxizität von verschiedenen Herbiziden gegenüber Algen:
Chemical Abstracts, Band 115: 108193x & Rev.Sci.Eau, 1991, Band 4(1), Seiten 121-134 ;
Chemical Abstracts, Band 103: 173668x & Environ.Toxicol.Chem., 1985, Band 4(5), Seiten 695-701;
Chemical Abstracts, Band 121: 2943a & Bull.Environ.Contam.Toxicol., 1994, Band 53(1), Seiten 120-6 ;
Chemical Abstracts, Band 84: 26692m & Gas-Wasserfach, Wasser - Abwasser, 1975, Band 116(8), Seiten 366-369;
Chemical Abstracts, Band 118: 95907t & J.lndian Bot., 1991, Band 70(1-4), Seiten 277-80;
Chemical Abstracts, Band 125: 188002d & Chemosphere, 1996, Band 33(6), Seiten 1129-1141;
Chemical Abstracts, Band 120: 185027b & Sci.Total Environ., 1993, Suppl., Pt.2 , Seiten 845-851;

Chemical Abstracts, Band 105: 28822e & Actes - Congr.lnt.Alteration Conserv.Pierre, 5th, 1985, Band 2 , Seiten 663-74 offenbart die Verwendung von Tebuthiuron zum Schutz von Bausteinen gegen Algenbefall.

EP-A-345955 offenbart die Verwendung von Kombinationen bestehend aus a) einem halogenierten aromatischen Nitril, b) einem Harnstoff wie Isoproturon, und c) einem halogen-enthaltenden aromatischen Alkyl-sulphoxid oder -sulphon zum Schtuz von technischen Materialien vor Bakterien, Pilzen, Algen usw.

WO-A-9718710 offenbart synergistische Algizidkombinationen aus Triazinen und N,N-dialkylharnstoffderivaten zum Schutz technischer Produkte.

Außerdem ist bei Untersuchungen des Umweltverhaltens von Isoproturon die Wirksamkeit gegenüber einigen Süßwasseralgen bekannt geworden (s. M. Manthey et al., Sci. Total Environ. 1993, S. 453-459; F.A. Anton et al., Sci. Total Environ. 1993, S. 845-851; J.I.N. Kumar, J. Indian Bot. Soc. 70, 277 (1991)).

Es wurde nun unerwarteterweise gefunden, daß sich die Wirkstoffe Benzthiazuron, Methabenzthiazuron, Tebuthiuron, Isoproturon und Ethiozin auch zur Bekämpfung des Algenbewuchses von bestimmten technischen

Materialien eignen. Dieses ist vor allem auch deshalb unerwartet, weil sich mit den genannten Wirkstoffen auch die in Anstrichsystemen relevanten Blaualgen bekämpfen lassen.

Außerdem wurde gefunden, daß die genannten Wirkstoffe nicht aus den zu schützenden Medien (Dispersionsfarben etc.) ausgewässert werden und somit zu einer hervorragenden Langzeitwirkung führen. Die Wirkstoffe sind sowohl in der handelsüblichen Farbe als auch in der getrockneten, aufgetragenen Farbe langzeitstabil.

Aufgrund der guten algiziden Wirksamkeit wirken die erfindungsgemäßen Verbindungen auch gegen Flechten. In Kombination mit Fungiziden zeigt sich hierbei eine synergistische Steigerung der Wirkhöhe.

Außerdem wurde gefunden, daß man die Wirkung von Benzthiazuron, Methabenzthiazuron, Tebuthiuron, Isoproturon und Ethiozin auch deutlich, teilweise sogar synergistisch verbessern kann, wenn man als Zumischpartner weitere Herbizide, Algizide und/oder Materialschutzmittel zumischt.

Bei den zu bekämpfenden Algen handelt es sich vorzugsweise um prokaryotische Algen (Cyanophyta/Blaualgen) wie z.B. Vertreter aus der Unterklasse Coccogoneae und der Unterklasse Hormogoneae.

Beispielhaft - jedoch nicht einschränkend - seien aus der Ordnung Chroococcales Arten der Gattungen Synechococcus, Chroococcus, Gloeocapsa, Aphanocapsa, Aphanothece, Microcystis und Merismopedia, aus den Ordnungen Chamaesiphonales und Pleurocapsales Arten der Gattungen Chamaesiphon und Dermatocarpa, aus der Ordnung Oscillatoriales Arten der Gattungen Phormidium, Schizothrix, Spirulina, Plectonema und Lyngbya, aus der Ordnung Nostocales Arten der Gattungen Nostoc, Rivularia, Tolypothrix, Scytonema, Anabaenopsis, Calothrix und Aulosira, aus der Ordnung Stigonematatles Arten der Gattungen Stigonema, Fischerella, Hapalosiphon und Mastigocladus genannt.

Ferner zeigen die Verbindungen auch eine gute Wirksamkeit gegen eukaryotische Vertreter aus den Abteilungen Heterokontophyta, Rhodophyta, Chlorophyta, Euglenophyta, Cryptophyta, Dinophyta und Haptophyta. Beispielhaft - ohne jedoch eingrenzend zu sein - seien aus der Klasse Xanthophyceae Arten der Gattungen Tribonema und Vaucheria, aus der Klasse Chrysophyceae Arten der Gattungen Chrysocapsa, Rhizochrysis, Cfhrysosphaera, Phaeothamnion und Thallochrysis, aus der Klasse Phaeophyceae (Braunalgen) Arten der Gattungen Ectocarpus, Pylaiella, Cutleria, Zanardinia, Dictyota, Padina, Dictyopteris, Laminaria, Macrocystis, Lessonia, Nerocystis, Chorda, Alaria, Fucus, Ascophyllum, Himanthalia, Sargassum, Cystoseira, Halidrys, Pelvetia, Coccophora und Durvilla, aus der Klasse Rhodophyceae (Rotalgen) Arten der Gattungen Porphyridum, Bangia, Porphyra, Corallina, Lithothamnia, Lithophyllum, Rhodymania, Delesseria, Grinnellia, Platysiphonia, Polysiphonia, Ceramium, Plumaria, aus der Klasse Chlorophyceae (Grünalgen) Arten der Gattungen Chlorococcum, Chlorella, Spongiochloris, Monostroma, Ulva, Enteromorpha, Ulothrix, Trentepohlia, Apatococcus, Desmococcus, Cladophora, Siphonocladus, Valonia, Caulerpa, Bryopsis, Acetabularia, Halimeda und Tuna genannt.

Bei den algizid auszurüstenden Medien bzw. technischen Materialien handelt es sich vorzugsweise um Holzschutzfarben und -lasuren, und insbesondere um Innen- und Außendispersionsfarben

Unter Dispersionsfarben werden wäßrige, alkalisch eingestellte Anstrichmittel auf Basis von Polymerdispersionen, die als Bindemittel dienen, verstanden. Die zur Herstellung von Dispersionsfarben eingesetzten Polymerdispersionen enthalten beispielhaft und vorzugsweise Polyacrylate, Styrolacrylate, Polyvinylacetat, Polyvinylpropionat u.a. Polymere.

Benzthiazuron, Methabenzthiazuron, Tebuthiuron, Isoproturon und/oder Ethiozin werden in die oben genannten Dispersionsfarben oder in deren Ausgangsprodukte entweder direkt, oder in Form von Formulierungen bzw. Mischungen eingearbeitet.

Benzthiazuron, Methabenzthiazuron, Tebuthiuron, Isoproturon und Ethiozin liegen zu ihrer Einarbeitung in die technischen Materialien vorzugsweise in Form üblicher Formulierungen, wie Lösungen, Emulsionen, Suspensionen, Pulver, Schäume, Pasten, Granulate, Aerosole und Feinstverkapselungen in polymeren Stoffen, vor.

Diese Formulierungen bzw. Mittel werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen infrage: Aromaten, wie Xylol, Toluol, Alkylnaphthaline, chlorierte Aromaten oder chlorierte aliphatische Kohlenwasserstoffe, wie Chlorbenzole, Chlorethylene, oder Methylenchlorid, aliphatische Kohlenwasserstoffe, wie Cyclohexan oder Paraffine, z.B. Erdölfraktionen, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid oder Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen infrage: z.B. natürliche Gesteinsmehle, wie Kaoline, Tonerden, Talkum, Kreide, Quartz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen infrage: z.B. nicht ionogene und anionische Emulgatoren, wie Polyoxyethylen-Fettsäureester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen infrage: z.B. Ligninsulfitablaugen und Methylcellulose.

Es können in den Formulierungen Haftmittel wie Carboxy-methylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Ein weiterer Gegenstand der vorliegenden Anmeldung sind synergistisch wirkende Mischungen von Benzthiazuron, Methabenzthiazuron, Tebuthiuron, Isoproturon und/oder Ethiozin mit mindestens einem Fungizid und gegebenenfalls weiteren Wirkstoffen.

Die Wirksamkeit gegen Algen sowie das Wirkungsspektrum der erfindungsgemäßen Wirkstoffe bzw. hieraus hergestellter Formulierungen wird auch erhöht, wenn weitere algizid-wirksame Verbindungen, Bakterizide, Molluscizide, Insektizide und/oder Antifoulingmittel zugesetzt werden. Die Mischungen besitzen ein breiteres Wirkspektrum als die einzelnen Wirkstoffe allein.

In vielen Fällen erhält man auch dabei synergistische Effekte, d.h. die Wirksamkeit der Mischung ist größer als die Wirksamkeit der Einzelkomponenten. Besonders günstige Mischungspartner sind z.B. die folgenden Verbindungen:
**Triazole wie:**
   Azaconazole, Azocyclotin, Bitertanol, Bromuconazole, Cyproconazole, Diclobutrazole, Difenoconazole, Diniconazole, Epoxyconazole, Etaconazole, Fenbuconazole, Fenchlorazole, Fenethanil, Fluquinconazole, Flusilazole, Flutriafol, Furconazole, Hexaconazole, Imibenconazole, Ipconazole, Isozofos, Myclobutanil, Metconazole, Paclobutrazol, Penconazole, Propioconazole, (±)-cis-1-(4-chlorphenyl)-2-(1H-1,2,4-triazol-1-yl)-cycloheptanol, 2-(1-tert-Butyl)-1-(2-chlorphenyl)-3-(1,2,4-triazol-1-yl)-propan-2-ol, Tebuconazole, Tetraconazole, Triadimefon, Triadimenol, Triapenthenol, Triflumizole, Triticonazole, Uniconazole sowie deren Metallsalze und Säureaddukte;
**Imidazole wie:**
   Clotrimazole, Bifonazole, Climbazole, Econazole, Fenapamil, Imazalil, Isoconazole, Ketoconazole, Lombazole, Miconazole, Pefurazoate, Prochloraz, Triflumizole, Thiazolcar, 1-Imidazolyl-1-(4'-chlorophenoxy)-3,3-dimethylbutan-2-on sowie deren Metallsalze und Säureaddukte;
**Pyridine und Pyrimidine wie:**
   Ancymidol, Buthiobate, Fenarimol, Nuarimol, Triamirol;
**Succinat-Dehydrogenase Inhibitoren wie:**
   Benodanil, Carboxim, Carboximsulfoxid, Cyclafluramid, Fenfuram, Flutanil, Furcarbanil, Furmecyclox, Mebenil, Mepronil, Methfuroxam, Metsulfovax, Pyrocarbolid, Oxycarboxin, Shirlan, Seedvax;
**Naphthalin-Derivate wie:**
   Terbinafine, Naftifine, Butenafine, 3-Chloro-7-(2-aza-2,7,7-trimethyl-oct-3-en-5-in);
**Sulfenamide wie:**
   Dichlorfluanid, Tolylfluanid, Folpet, Fluorfolpet; Captan, Captofol;
**Benzimidazole wie:**
   Carbendazim, Benomyl, Fuberidazole, Thiabendazole oder deren Salze;
**Morpholinderivate wie:**
   Aldimorph, Dimethomorph, Dodemorph, Falimorph, Fenpropidin Fenpropimorph, Tridemorph, Trimorphamid und ihre arylsulfonsauren Salze, wie z.B. p-Toluolsulfonsäure und p-Dodecylphenyl-sulfonsäure;
**Benzthiazole wie:**
   2-Mercaptobenzothiazol;
**Benzthiophendioxide wie:**
   Benzo[b]thiophen-S,S-dioxid-carbonsäurecyclohexylamid;
**Benzamide wie:**
   2,6-Dichloro-N-(4-trifluoromethylbenzyl)-benzamide, Tecloftalam,
**Borverbindungen wie:**
   Borsäure, Borsäureester, Borax;
**Formaldehyd und Formaldehydabspaltende Verbindungen wie:**
   Benzylalkoholmono-(poly)-hemiformal, n-Butanol-hemiformal, Dazomet, Ethylenglycol-hemiformal, Hexa-hydro-S-triazine, Hexamethylentetramin, N-Hydroxymethyl-N'-methylthioharnstoff, N-Methylolchloracetamid, Oxazolidine, Paraformaldehyd, Taurolin, Tetrahydro-1,3-oxazin, N-(2-Hydroxypropyl)-amin-methanol;
**Isothiazolinone wie:**
   N-Methylisothiazolin-3-on, 5-Chlor-N-methylisothiazolin-3-on, 4,5-Dichloro-N-octylisothiazolin-3-on, 5-Chlor-N-octylisothiazolinon, N-Octyl-isothiazolin-3-on, 4,5-Trimethylen-isothiazolinone, 4,5-Benzisothiazolinone;
**Aldehyde wie:**
   Zimtaldehyd, Formaldehyd, Glutardialdehyd, β-Bromzimtaldehyd;
**Thiocyanate wie:**
   Thiocyanatomethylthiobenzothiazol, Methylenbisthiocyanat;
**quartäre Ammoniumverbindungen wie:**
   Benzalkoniumchlorid, Benzyldimethyltetradecylammoniumchlorid, Benzyldimethyldodecylammoniumchlorid, Dichlorbenzyl-dimethyl-alkyl-ammoniumchlorid, Didecyldimethylammoniumchlorid, Dioctyl-dimethyl-ammoniumchlorid, N-Hexadecyl-trimethyl-ammoniumchlorid, 1-Hexadecyl-pyridinium-chlorid;
**Iodderivate wie:**
   Diiodmethyl-p-tolylsulfon, 3-Iod-2-propinyl-alkohol, 4-Chlorphenyl-3-iodpropargylformal, 3-Brom-2,3-diiod-2-propenylethylcarbamat, 2,3,3-Triiodallylalkohol, 3-Brom-2,3-diiod-2-propenylalkohol, 3-Iod-2-propinyl-n-butylcarbamat, 3-Iod-2-propinyl-nhexylcarbamat, 3-Iod-2-propinyl-cyclohexylcarbamat, 3-Iod-2-propinyl-phenylcarbamat;
**Phenole wie:**
   Tribromphenol, Tetrachlorphenol, 3-Methyl-4-chlorphenol, 3,5-Dimethyl-4-chlorphenol, Phenoxyethanol, Dichlorphen, 2-Benzyl-4-chlorphenol, 5-Chlor-2-(2,4-dichlorphenoxy)-phenol, Hexachlorophen, p-Hydroxybenzoesäureester, o-Phenylphenol, m-Phenylphenol, p-Phenylphenol und deren Alkali- und Erdalkalimetallsalze;
**Mikrobizide mit aktivierter Halogengruppe wie:**
   Bronopol, Bronidox, 2-Brom-2-nitro-1,3-propandiol, 2-Brom-4'-hydroxy-acetophenon, 1-Brom-3-chlor-4,4,5,5-tetramethyl-2-imidazoldinone, β-Brom-β-nitrostyrol, Chloracetamid, Chloramin T, 1,3-Dibrom-4,4,5,5-tetrametyl-2-imidazoldinone, Dichloramin T, 3,4-Dichlor-(3H)-1,2-dithiol-3-on, 2,2-Dibrom-3-nitril-propionamid, 1,2-Dibrom-2,4-dicyanobutan, Halane, Halazone, Mucochlorsäure, Phenyl-(2-chlorcyan-vinyl)sulfon, Phenyl-(1,2-dichlor-2-cyanvinyl)sulfon, Trichlorisocyanursäure;
**Pyridine wie:**
   1-Hydroxy-2-pyridinthion (und ihre Na-, Fe-, Mn-, Zn-Salze), Tetrachlor-4-methylsulfonylpyridin, Pyrimethanol, Mepanipyrim, Dipyrithion, 1-Hydroxy-4-methyl-6-(2,4,4-trimethylpentyl)-2(1H)-pyridin;
**Methoxyacrylate oder ähnliches wie:**
   Methyl-(E)-methoximino[alpha-(o-tolyloxy)-o-tolyl]acetat,
   (E)-2-Methoxyimino-N-methyl-2-(2-phenoxyphenyl)acetamid,
   (E)-2-{2-[6-(2-cyanophenoxy)pyrimidin-4-yloxy]phenyl}-3-methoxyacrylat,
   O-Methyl-2-[([3-methoximino-2-butyl)imino]oxy)o-tolyl]-2-methoximinoacetimidate,
   2-[[[[1-(2,5-dimethylphenyl)ethylidene]amino]oxy]methyl]-.alpha.-(methoximino)-N-metyl-benzeneacetamide,
   alpha-(methoxyimino)-N-methyl-2-[[[[ 1-[3-(trifluoromethyl)phenyl]ethylidene]amino]oxy]methyl]-benzeneacetamide,
   alpha-(methoxyimino)-2-[[[[1-[3-(trifluoromethyl)phenyl]ethylidene]amino]oxy]methyl]-benzeneaceticacid-methylester,
   alpha-(methoxymethylene)-2-[[[[1-[3-(trifluoromethyl)phenyl]ethylidene]amino] oxy]methyl]-benzeneaceticacid-methylester,
   2-[[[5-chloro-3-(trifluormethyl)-2-pyridinyl]oxy]methyl]-.alpha.-(methoxyimino)-N-methyl-benzeneacetamide,
   2-[[[cyclopropyl[(4-ethoxyphenyl)imino]methyl]thio]methyl]-.alpha.-(methoxyimino)-benzeneaceticacid-methylester,
   alpha-(methoxyimino)-N-methyl-2-(4-methyl-5-phenyl-2,7-dioxa-3,6-diazaocta-3,5-dien-1-yl)-benzeneacetamide,
   alpha-(methoxymethylene)-2-(4-methyl-5-phenyl-2,7-dioxa-3,6-diazaocta-3,5-dien-1-yl)-benzeneaceticacid-methylester,
   alpha-(methoxyimino)-N-methyl-2-[[[1-[3-(trifluoromethyl)phenyl]-ethoxy]imino]methyl]-benzeneacetamide,
   2-[[(3,5-dichloro-2-pyridinyl)oxy]methyl]-.alpha.-(methoxyimino)-N-methylbenzeneacetamide,
   2-[4,5-dimethyl-9-(4-morpholinyl)-2,7-dioxa-3,6-diazanona-3,5-dien-1-yl]-.alpha.-(methoxymethylene)-benzeneaceticacid-methylester;
**Metallseifen wie:**
   Zinn-, Kupfer-, Zinknaphtenat, -octoat, 2-ethylhexanoat, -oleat, -phosphat, -benzoat;
**Metallsalze wie:**
   Kupferhydroxycarbonat, Natriumdichromat, Kaliumdichromat, Kaliumchromat, Kupfersulfat, Kupferchlorid, Kupferborat, Zinkfluorosilikat, Kupferfluorosilikat;
**Oxide wie:**
   Tributylzinnoxid, Cu₂O, CuO, ZnO;
**Dithiocarbamate wie:**
   Cufraneb, Ferban, Kalium-N-hydroxymethyl-N'-methyl-dithiobarbamat, Na- oder K-dimethyldithiocarbamat, Macozeb, Maneb, Metam, Metiram, Thiram, Zineb, Ziram;
**Nitrile wie:**
   2,4,5,6-Tetrachlorisophthalodinitril, Dinatrium-cyano-dithioimidocarbamat;
**Chinoline wie:**
   8-Hydroxychinolin und deren Cu-Salze;
**sonstige Fungizide und Bakterizide wie:**
   5-Hydroxy-2(5H)-furanon; 4,5-Benzdithiazolinon, 4,5-Trimethylendithiazolinon, N-(2-p-Chlorbenzoylethyl)-hexaminiumchlorid, 2-Oxo-2-(4-hydroxy-phenyl)acethydroximsäure-chlorid, Tris-N-(cyclohexyldiazeniumdioxy)-aluminium, N-(Cyclo-hexyldiazeniumdioxy)-tributylzinn bzw. K-Salze, Bis-N-(cyclohexyldiazeniumdioxy)-kupfer;
   Ag, Zn oder Cu-haltige Zeolithe allein oder eingeschlossen in polymere Werkstoffe.
**Insektizide / Akarizide / Nematizide wie:**
   Abamectin, Acephat, Acetamiprid, Acrinathrin, Alanycarb, Aldicarb, Aldoxycarb, Aldrin, Allethrin, Alpha-cypermethrin, Amitraz, Avermectin, AZ 60541, Azadirachtin, Azinphos A, Azinphos M, Azocyclotin,
   Bacillus thuringiensis, Barthrin, 4-Bromo-2(4-chlorphenyl)-1-(ethoxymethyl)-5-(trifluoromethyl)-1H-pyrrole-3-carbonitrile, Bendiocarb, Benfuracarb, Bensultap, Betacyfluthrin, Bifenthrin, Bioresmethrin, Bioallethrin, Bromophos A, Bromophos M, Bufencarb, Buprofezin, Butathiophos, Butocarboxin, Butoxycarboxim,
   Cadusafos, Carbaryl, Carbofuran, Carbophenothion, Carbosulfan, Cartap, Chinomethionat, Cloethocarb, Chlordane, Chlorethoxyfos, Chlorfenvinphos, Chlorfluazuron, Chlormephos, N-[(6-Chloro-3-pyridinyl)-methyl]-N'-cyano-N-methyl-ethanimidamide, Chlorpicrin, Chlorpyrifos A, Chlorpyrifos M, Cis-Resmethrin, Clocythrin, Cypophenothrin Clofentezin, Coumaphos, Cyanophos, Cycloprothrin, Cyfluthrin, Cyhalothrin, Cyhexatin, Cypermethrin, Cyromazin,
   Decamethrin, Deltamethrin, Demeton M, Demeton S, Demeton-S-methyl, Diafenthiuron, Dialiphos, Diazinon, 1,2-Dibenzoyl-1(1,1-dimethyl)-hydrazin, DNOC, Dichlofenthion, Dichlorvos, Dicliphos, Dicrotophos, Diflubenzuron, Dimethoat, Dimethyl-(phenyl)-silyl-methyl-3-phenoxybenzylether, Dimethyl-(4-Ethoxyphenyl)-silylmethyl-3-phenoxybenzylether, Dimethylvinphos, Dioxathion, Disulfoton,
   Eflusilanate, Emamectin, Empenthrin, Endosulfan, EPN, Esfenvalerat, Ethiofencarb, Ethion, Ethofenprox, Etrimphos,
   Fenamiphos, Fenazaquin, Fenbutatinoxid, Fenfluthrin, Fenitrothion, Fenobucarb, Fenothiocarb, Fenoxycarb, Fenpropathrin, Fenpyrad, Fenpyroximat, Fensulfothion, Fenthion, Fenvalerate, Fipronil, Fluazuron, Flucycloxuron, Flucythrinate, Flufenoxuron, Flumethrin Flufenprox, Fluvalinate, Fonophos, Formethanate, Formothion, Fosmethilan Fosthiazat, Fubfenprox, Furathiocarb,
   HCH, Heptenophos, Hexaflumuron, Hexythiazox, Hydramethylnon, Hydroprene,
   Imidacloprid, Iodfenfos, Iprobenfos, Isazophos, Isoamidophos, Isofenphos, Isoprocarb, Isoprothiolane, Isoxathion, Ivermectin, Lama-cyhalothrin, Lufenuron,
   Kadedrin,
   Lambda-Cyhalothrin, Lufenuron,
   Malathion, Mecarbam, Mervinphos, Mesulfenphos, Metaldehyd, Methacrifos, Methamidophos, Methidathion, Methiocarb, Methomyl, Metalcarb, Milbemectin, Monocrotophos, Moxiectin,
   Naled, NC 184, NI 125, Nicotin, Nitenpyram,
   Omethoat, Oxamyl, Oxydemethon M, Oxydeprofos,
   Parathion A, Parathion M, Penfluron, Permethrin, 2-(4-Phenoxyphenoxy)-ethylethylcarbamat, Phenthoat, Phorat, Phosalon, Phosmet, Phosphamidon, Phoxim, Pirimicarb, Pirimiphos M, Pirimiphos A, Prallethrin, Profenophos, Promecarb, Propaphos, Propoxur, Prothiophos, Prothoat, Pymetrozin, Pyrachlophos, Pyridaphenthion, Pyresmethrin, Pyrethrum, Pyridaben, Pyrimidifen, Pyriproxifen,
   Quinalphos,
   Resmethrin, RH-7988, Rotenone,
   Salithion, Sebufos, Silafluofen, Sulfotep, Sulprofos,
   Tau-fluvalinate, Taroils, Tebufenozide, Tebufenpyrad, Tebupirimphos, Teflubenzuron, Tefluthrin, Temephos, Terbam, Terbufos, Tetrachlorvinphos, Tetramethrin, Tetramethacarb, Thiafenox, Thiapronil, Thiodicarb, Thiofanox, Thiazophos, Thiocyclam, Thiomethon, Thionazin, Thuringiensin, Tralomethrin, Triarathen, Triazophos, Triazamate, Triazuron, Trichlorfon, Triflumuron, Trimethacarb,
   Vamidothion, XMC, Xylylcarb, Zetamethrin;
**Molluscizide wie:**
   Fentinacetate, Metaldehyde, Methiocarb. Niclosamide;
**Herbizide und weitere Algizide wie:**
   Acetochlor, Acifluorfen, Aclonifen, Acrolein, Alachlor, Alloxydim, Ametryn, Amidosulfuron, Amitrole, Ammonium sulfamate, Anilofos, Asulam, Atrazine, Aziptrotryne, Azimsulfuron,
   Benazolin, Benfluralin, Benfuresate, Bensulfuron, Bensulfide, Bentazone, Benzofencap, Benzthiazuron, Bifenox, Borax, Bromacil, Bromobutide, Bromofenoxim, Bromoxynil, Butachlor, Butamifos, Butralin, Butylate, Bialaphos, Benzoyl-prop, Bromobutide,
   Carbetamide, Chlomethoxyfen, Chloramben, Chlorbromuron, Chlorflurenol, Chloridazon, Chlorimuron, Chlornitrofen, Chloroacetic acid, Chlorotoluron, Chloroxuron, Chlorpropham, Chlorsulfuron, Chlorthal, Chlorthiamid, Cinmethylin, Cinofulsuron, Clethodim, Clomazone, Chlomeprop, Clopyralid, Cyanamide, Cyanazine, Cycloate, Cycloxydim, Chloroxynil, Clodinafop-propargyl, Cumyluron, CGA 248757, Clometoxyfen, Cyhalofop, Clopyrasuluron, Cyclosulfamuron,
   Dichlorprop, Dichlorprop-P, Diclofop, Diethatyl, Difenoxuron, Difenzoquat, Diflufenican, Dimefuron, Dimepiperate, Dimethachlor, Dimethipin, Dinitramine, Dinoseb, Dinoseb Acetate, Dinoterb, Diphenamid, Dipropetryn, Diquat, Dithiopyr, Diduron, DNOC, DSMA, 2,4-D, Daimuron, Dalapon, Dazomet, 2,4-DB, Desmedipham, Desmetryn, Dicamba, Dichlobenil, Dimethamid, Dithiopyr, Dimethametryn,
   Eglinazine, Endothal, EPTC, Esprocarb, Ethalfluralin, Ethidimuron, Ethofumesate, Ethobenzanid, Ethoxyfen, ET 751, Ethametsulfuron,
   Fenoxaprop, Fenoxaprop-P, Fenuron, Flamprop, Flamprop-M, Flazasulfuron, Fluazifop, Fluazifop-P, Fuenachlor, Fluchloralin, Flumeturon, Fluorocglycofen, Fluoronitrofen, Flupropanate, Flurenol, Flurochloridone, Fluroxypyr, Fomesafen, Fosamine, Flamprop-isopropyl, Flamprop-isopropyl-L, Flumiclorac-pentyl, Flumipropyn, Flumioxzim, Flurtatone, Flumioxzim,
   Glyphosate, Glufosinate-ammonium,
   Haloxyfop, Hexazinone,
   Imazamethabenz, Isoproturon, Isoxaben, Isoxapyrifop, Imazapyr, Imazaquin, Imazethapyr, Ioxynil, Isopropalin, Imazosulfuron,
   KUH 911, KUH 920,
   Lactofen, Lenacil, Linuron, LS830556,
   MCPA, MCPA-thioethyl, MCPB, Mecoprop, Mecoprop-P, Mefenacet, Mefluidide, Metam, Metamitron, Metazachlor, Methabenzthiazuron, Methazole, Methoroptryne, Methyldymron, Methylisothiocyanate, Metobromuron, Metoxuron, Metribuzin, Metsulfuron, Molinate, Monalide, Monolinuron, MSMA, Metolachlor, Metosulam, Metobenzuron,
   Naproanilide, Napropamide, Naptalam, Neburon, Nicosulfuron, Norflurazon, Natriumchlorat,
   Oxadiazon, Oxyfluorfen, Orbencarb, Oryzalin, Quinchlorac, Quinmerac,
   Propyzamide, Prosulfocarb, Pyrazolate, Pyrazolsulfuron, Pyrazoxyfen, Pyributicarb, Pyridate, Paraquat, Pebulate, Pendimethalin, Pentachlorophenol, Pentanochlor, Petroleum oils, Phenmedipham, Picloram, Piperophos, Pretilachlor, Primisulfuron, Prodiamine, Prometryn, Propachlor, Propanil, Propaquizafob, Propazine, Propham, Pyrithiobac,
   Quinmerac, Quinocloamine, Quizalofop, Quizalofop-P,
   Rimsulfuron,
   Sethoxydim, Sifuron, Simazine, Simetryn, Sulfometuron, Sulfentrazone, Sulcotrione, Sulfosate,
   Teeröle, TCA, Tebutam, Tebuthiuron, Terbacil, Terbumeton, Terbuthylazine, Terbutryn, Thiazafluoron, Thifensulfuron, Thiobencarb, Thiocarbazil, Tralkoxydim, Triallate, Triasulfuron, Tribenuron, Triclopyr, Tridiphane, Trietazine, Trifluralin, Tycor, Thdiazimin, Thiazopyr, Triflusulfuron,
   Vernolate.

Die Gewichtsverhältnisse der Wirkstoffe in diesen Wirkstoffkombinationen können in relativ großen Bereichen variiert werden.

Vorzugsweise erhalten die Wirkstoffkombinationen das Benzthiazuron, Methabenzthiazuron, Tebuthiuron, Isoproturon und/oder Ethiozin zu 0,1 bis 99,9 %, insbesondere zu 1 bis 75 %, besonders bevorzugt 5 bis 50 %, wobei der Rest zu 100 % durch einen oder mehrere der obengenannten Mischungspartner ausgefüllt wird.

Ein zum Schutz von Dispersionsfarben, Antifoulingfarben und anderen technischen Materialien gegen Algen einsetzbares Konzentrat enthalten die erfindungsgemäßen Wirkstoffe bzw. die Wirkstoffkombination in einer Konzentration von 0,01 bis 95 Gew.-%, insbesondere 0,1 bis 60 Gew.-%.

Die Anwendungskonzentrationen der Werkstoffe bzw. der Wirkstoffkombinationen richtet sich nach der Art und dem Vorkommen der zu bekämpfenden Algen sowie nach der Zusammensetzung der zu schützenden Farbe. Die optimale Einsatzmenge kann durch Testreihen ermittelt werden. Im allgemeinen liegen die Anwendungskonzentrationen im Bereich von 0,001 bis 5 Gew.-%, vorzugsweise von 0,05 bis 1,0 Gew.-%, bezogen auf die zu schützende Farbe.

Die folgenden Beispiele sollen die Verwendungsmöglichkeit der Wirkstoffe als Algizide verdeutlichen:

### Beispiele

### Beispiel I

0,5 % Benzthiazuron, Methabenzthiazuron, Tebuthiuron, Isoproturon und Ethiozin werden jeweils in eine Außendispersionsfarbe auf der Basis Styrolacrylat eingearbeitet. Anschließend werden die Wirkstoff-haltigen Anstrichmittel beidseitig auf Karton gestrichen.

Die Prüfkörper werden durch Tauchen in einer Algensuspension aus Phormidium-, Oscillatoria, Chlorella- und Scenedesmus-Arten kontaminiert und auf mit Allen's Agar befüllte und mit den genannten Algen beimpfte Petrischalen gelegt.

Nach 4wöchiger Inkubation bei Raumtemperatur und 1 200-1 500 LUX zeigten die Benzthiazuron-, Methabenzthiazuron-, Tebuthiuron-, Isoproturon- und Ethiozinhaltigen Platten eine sehr gute Algenfestigkeit, während eine wirkstofffreie Kontrolle von Testorganismen vollständig bewachsen wird.

### Beispiel II

0,5 % Benzthiazuron, Methabenzthiazuron, Tebuthiuron, Isoproturon und Ethiozin werden jeweils in eine Außendispersionsfarbe auf der Basis Styrolacrylat eingearbeitet. Anschließend werden die Wirkstoff-haltigen Anstrichmittel beidseitig auf Karton gestrichen.

Die Prüfkörper werden anschließend 24 h bei 12 l/h Durchflußgeschwindigkeit und 20°C geleacht.

Nach Beendigung des Wässerungszyclus werden die Muster aus dem Wasser genommen, abgespült und für 24 h getrocknet.

Die Prüfkörper werden durch Tauchen in einer Algensuspension aus Phormidium-, Oscillatoria, Chlorella- und Scenedesmus-Arten kontaminiert und auf mit Allen's Agar befüllte und mit den genannten Algen beimpfte Petrischalen gelegt.

Nach 4wöchiger Inkubation bei Raumtemperatur und 1 200-1 500 LUX zeigen die Benzthiazuron-, Methabenzthiazuron-, Tebuthiuron-, Isoproturon- und Ethiozinhaltigen Platten eine sehr gute Algenfestigkeit, während eine wirkstofffreie Kontrolle von Testorganismen vollständig bewachsen wurde.

Analog Beispiel I und II werden die Versuche mit auf Polyvinylacetat basierter Außendispersionsfarbe durchgeführt.

Hier wird mit 0,5 % Benzthiazuron, Methabenzthiazuron, Tebuthiuron, Isoproturon und Ethiozin mit und ohne Wässerung kein Bewuchs festgestellt, während die unbehandelten Kontrollen vollständig bewachsen sind.

## Patentansprüche

1. Verwendung von Benzthiazuron, Methabenzthiazuron, Tebuthiuron, Isoproturon und/oder Ethiozin zur Bekämpfung des Algenwachstums auf Innenund Außendispersionsfarben, Holzschutzfarben und -lasuren.

2. Verfahren zur Bekämpfung des Algenwachstums auf Innen- und Außendispersionsfarben, Holzschutzfarben und -lasuren, **dadurch gekennzeichnet, daß** man die genannten Materialien mit Benzthiazuron, Metha-benzthiazuron, Tebuthiuron, Isoproturon und/oder Ethiozin versetzt oder behandelt.

3. Innen- und Außendispersionsfarben, Holzschutzfarben und -lasuren enthaltend Benzthiazuron, Methabenzthiazuron, Tebuthiuron, Isoproturon und/oder Ethiozin.

4. Innen- und Außendispersionsfarben, Holzschutzfarben und -lasuren gemäß Anspruch 3, enthaltend zusätzlich mindestens ein Fungizid, Bakterizid, Molluscizid, Insektizid, Herbizid, Algizid und/oder Antifoulingwirkstoff.

## Claims

1. Use of benzthiazuron, methabenzthiazuron, tebuthiuron, isoproturon and/or ethiozin for controlling algal growth on interior and exterior emulsion paints and on wood preservative paints and stains.

2. Method of controlling algal growth on interior and exterior emulsion paints and wood preservative paints and stains, **characterized in that** the said materials are admixed or treated with benzthiazuron, methabenzthiazuron, tebuthiuron, isoproturon and/or ethiozin.

3. Interior and exterior emulsion paints and wood preservative paints and stains comprising benzthiazuron, methabenzthiazuron, tebuthiuron, isoproturon and/or ethiozin.

4. Interior and exterior emulsion paints and wood preservative paints and stains according to Claim 3, further comprising at least one fungicide, bactericide, molluscicide, insecticide, herbicide, algicide and/or active antifouling substance.

## Revendications

1. Utilisation de benzthiazuron, de méthabenzthiazuron, de tébuthiuron, d'isoproturon et/ou d'éthiozine pour lutter contre la croissance d'algues sur les peintures à dispersion intérieures et extérieures, peintures et glacis de protection du bois.

2. Procédé de lutte contre la croissance d'algues sur des peintures à dispersion intérieures et extérieures, peintures et glacis de protection du bois, **caractérisé en ce qu'**on mélange ou on traite les matériaux cités avec du benzthiazuron, du méthabenzthiazuron, du tébuthiuron, de l'isoproturon et/ou de l'éthiozine.

3. Peintures à dispersion intérieures et extérieures, peintures et glacis de protection du bois contenant du benzthiazuron, du méthabenzthiazuron, du tébuthiuron, de l'isoproturon et/ou de l'éthiozine.

4. Peintures à dispersion intérieures et extérieures, peintures et glacis de protection du bois selon la revendication 3, contenant en outre au moins un fongicide, un bactéricide, un molluscicide, un insecticide, un herbicide, un algicide et/ou une substance antifouling.
